(19) **Europäisches Patentamt / European Patent Office / Office européen des brevets**

(11) **EP 1 929 876 B2**

(12) # NEW EUROPEAN PATENT SPECIFICATION
After opposition procedure

(45) Date of publication and mention
of the opposition decision:
**17.06.2015 Bulletin 2015/25**

(45) Mention of the grant of the patent:
**16.11.2011 Bulletin 2011/46**

(21) Application number: **06796952.7**

(22) Date of filing: **29.08.2006**

(51) Int Cl.:
**A23C 9/18** *(2006.01)*    **A23C 9/146** *(2006.01)*

(86) International application number:
**PCT/JP2006/316975**

(87) International publication number:
**WO 2007/029565 (15.03.2007 Gazette 2007/11)**

(54) **MILK MATERIAL EXCELLING IN FLAVOR AND PROPERTY AND PROCESS FOR PRODUCING THE SAME**

MILCHSUBSTANZ MIT AUSGEZEICHNETEM GESCHMACK UND AUSGEZEICHNETEN EIGENSCHAFTEN, UND VERFAHREN ZU IHRER HERSTELLUNG

PRODUIT LAITIER EXCELLENT EN TERMES DE SAVEUR ET DE PROPRIETE ET SON PROCEDE DE PRODUCTION

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.08.2005 JP 2005246908**

(43) Date of publication of application:
**11.06.2008 Bulletin 2008/24**

(73) Proprietor: **Meiji Co., Ltd.**
**Tokyo (JP)**

(72) Inventors:
• **SUGAWARA, Takashi**
**Odawara-shi, Kanagawa (JP)**
• **SHIOKAWA, Masashi**
**Odawara-shi, Kanagawa (JP)**
• **NAKAOKA, Akemi**
**Odawara-shi, Kanagawa (JP)**
• **KUBOTA, Yasushi**
**Odawara-shi, Kanagawa (JP)**
• **KOMATSU, Yoshinori**
**Odawara-shi, Kanagawa (JP)**

(74) Representative: **Hoffmann Eitle**
**Patent- und Rechtsanwälte PartmbB**
**Arabellastraße 30**
**81925 München (DE)**

(56) References cited:
WO-A1-2004/052113    WO-A1-2005/115158
WO-A1-2006/054707    AU-A1- 2003 289 310
JP-A- 08 266 221     JP-A- 2002 253 116
JP-A- 2006 141 273   US-A- 2 708 632
US-A- 3 074 797      US-A- 4 374 714
US-B1- 6 447 828

• **TAKEUCHI Y. ET AL.: 'Kanetsu Sakkinji no Yozon Sanso Nodo ga Gyunyu no Fumi ni Ataeru Eikyo (3)' JAPANESE SOCIETY FOR FOOD SCIENCE AND TECHNOLOGY DAI 51 KAI TAIKAI KOENSHU 01 September 2004, page 30, XP003009757**
• **'Daily Processing Handbook', vol. 1, 2003, TETRA PAK PROCESSING SYSTEMS AB, LUND pages 5-6, 131-140 - 149-151**
• **Process Information - Influence of Free Air, Westfalia Separator Tee GmbH, 1 March 2005**

Remarks:
The file contains technical information submitted after the application was filed and not included in this specification

**Description**

Technical Field

The present invention relates to a process of producing concentrated milk or milk powder; concentrated milk or milk powder obtainable by the process; and foods and beverages with good flavor and physico-chemical properties which uses the same.

Background Art

Concentrated milk is obtainable by removing water from milk, non-fat milk, or the like, for example, by heating under reduced pressure to increase the solid content therein. Actually, since concentrated milk is liquid, it has short shelf-life and it involves difficulty in handling in terms of transportation and storage. In recent years, however, the amount of concentrated milk to be used has been gradually increased owing to the development of chilled distribution networks with tankers.

On the other hand, milk powder has good storage stability and it is not only convenient for transportation and storage but also has various advantages such as rapid dissolution in water for food production according to the necessity. Additionally, milk powder is highly nutritious and is used as an excellent animal protein source, a calcium source, and a raw material for processed milk, milk drinks, milk-added refreshing beverages, fermented milk, beverages with lactic acid bacteria, ice cream, cheese, household dishes, confectioneries, and bread production, in a wide variety of food industries.

However, since milk powder is produced via processes such as concentration and drying, milk powder has been problematic so far in that the great freshness, smooth touch and aftertaste essential to raw milk are all poor in the case of milk powder. Although concentrated milk has no such unpleasant reconstituting odor as that of milk powder and has good flavor in comparison with milk powder, concentrated milk never has the good freshness, highly smooth touch and good aftertaste of fresh milk. Additionally, since the solid contents in concentrated milk and milk powder are high and ingredients influencing flavor are concentrated therein, the elevation of the ratio thereof to be used as a raw material for foods and beverages has been limited.

In producing defatted concentrated milk and defatted milk powder, in particular, milk fat is eliminated from milk. Generally, in order to raise the separation efficiency between milk fat fractions and defatted milk fractions, milk is heated to increase the difference in specific gravity and passed through a step of a continuous centrifuge machine such as cream separator. In this case, it is known that phospholipid covering milk fat sphere is partially transferred to the side of defatted milk. The flavor of phospholipid is readily deteriorated via oxidation, which is one of the causes of the flavor deterioration of concentrated milk and milk powder.

In producing bread, traditionally, problems such as inhibition of fermentation and decrease of the expansion of bread dough during baking due to the use of milk powder have been remarked. In a case of preparing bread dough by adding defatted milk powder, it is known that no bread sufficiently satisfactory in terms of the fine texture and softness of baked bread can be produced (Patent reference 1). As described above, although concentrated milk and milk powder are highly nutritious and have wide applications, they are problematic in that they have not yet reached a level sufficiently satisfactory in terms of flavor and physico-chemical properties as a food material.

Various ingredients such as ion are concentrated and present in milk powder and concentrated milk. Generally, it is known that chloride ion not only influences flavor itself but also damages vitamin or reacts with organic matters in food. Additionally, metal ion is known as a cause of salty taste, bitterness and astringent taste.

As the method for removing ion from milk, there have been known ion exchange process and electrodialysis process. Additionally, the membrane separation technique has been developed for the purpose of recovering cheese whey as a by-product generated during cheese production to effectively use the resulting cheese whey in milk industries. Currently, the technique is now utilized widely in producing milk protein and peptide raw materials for formulated milk powder for infants; protein raw materials for various foods and beverages such as WPC (whey protein concentrate) and TMP (milk protein concentrate); milk products such as natural cheese and yogurt; composition-adjusted milk; concentrated milk; and the like.

Various types of membranes for membrane separation are present and have different characteristic features. RO (reverse osmosis) membrane works for the removal of only water from milk and is mainly used for the purpose of concentration. NF (nanofiltration) membrane functions for the permeation of monovalent ions such as sodium and potassium, and is therefore used for the purpose of removing salty taste via partial desalting. UF (ultrafiltration) membrane is used not only for the permeation of water and monovalent minerals, but also for the permeation of divalent ions such as calcium and magnesium and lactose, and is used mainly for milk protein concentration, desalting and lactose removal. MF (microfiltration) membrane has the largest pore diameter, through which most of milk ingredients are permeated. However, no microorganisms permeate through the membrane, so some of the membranes are practically used as a filter for removing bacteria in milk.

A report tells that in a case of reconstituted defatted milk prepared by re-dissolving defatted milk powder in water and then treated with an NF membrane (Non-patent reference 1), salty taste and enriched flavor are reduced in the reconstituted defatted milk, compared with those treated with RO membrane. The inventors made follow-up tests and found that, although the inventors verified the reduction of salty taste, the improvements of the flavor such as good taste, freshness, good smooth touch, and good aftertaste essential to fresh milk cannot be found at all.

Further, a process of obtaining low-mineral milk powder by filtering a raw material milk through NF membrane, concentrating the filtrate and then freeze-drying the resulting concentrate to reduce sodium and potassium is disclosed, (Patent reference 2). It is indicated that the low-mineral milk powder is useful as a raw food material for use in medicine and in confectioneries for preventing excess sodium intake. The inventors made follow-up tests and found that no improvement of the flavor such as good taste, freshness, great smooth touch and good aftertaste essential to fresh milk can be observed even by the process.

On the other hand, it is remarked that the change of milk flavor due to heating and sterilization is caused by the generation of sulfides and aldehydes on the basis of the heating oxidation of milk protein and fatty acid. In a case of concentrated milk and milk powder, steps of heating treatment such as concentration under heating and spray-drying in hot air are added. Therefore, it is expected that these products from oxidation under heating will increase. It is expected that, in the case of the concentrated milk and milk powder, there occurs further loss of the flavor such as good taste, freshness, great smooth touch and good aftertaste essential to fresh milk, in comparison with the case of sterilized milk.

A process of obtaining butter milk powder with good flavor by concentrating and drying butter milk sterilized under heating in a condition with reduced dissolved oxygen concentration is disclosed (Patent reference 3). Almost no oxidation odor is felt in the butter milk powder obtained by the process, and it is said that the butter milk powder has good flavor such as great taste and refreshing aftertaste. Concerning butter milk in which ions are removed, there is no description about the sterilization under heating, concentration and drying thereof. Further, no description is found about the relationship with physico-chemical properties such as food tissue and texture in a case that the butter milk and the butter milk powder as obtained by the process are used as raw food materials.

Non-patent reference 1 : "Nyugyo eno Nariorokagijyutsu eno Ouyo (Application of nanofiltration technology to milk industry)", Hitoshi Kume, New Membrane . Technology Symposium '95, March 14 to 17, 1995, Japan Membrane Academic Association, Japan Management Association

Patent reference 1 : JP-A-2003-47401

Patent reference 2 : JP-A-8-266221

Patent reference 3 : JP-A-2004-187539

Disclosure of the Invention

Concerning the problem of conventional concentrated milk and milk powder that, although they are simply handled, they are not at a level sufficiently satisfactory in terms of flavor, it is an object of the invention to provide concentrated milk and milk powder not only with flavor such as good taste, freshness, great smooth touch and good aftertaste essential to fresh milk as a raw material but also with further improvement of the flavor, as well as a process of producing the same. Additionally, it is an object of the invention to provide concentrated milk and milk powder capable of improving the physico-chemical properties of a food when they are used as raw materials of the food, as well as a process of producing the same.

The present inventors made intensive studies so as to solve the above problems. Consequently, the inventors have found that concentrated milk and milk powder obtainable by removing a part of ions, followed by heating treatment in a condition with low dissolved oxygen have good flavor, in comparison with usual milk powder and concentrated milk, and that they give the good taste, freshness, good smooth touch and good aftertaste essential to fresh milk when they were used as raw materials for beverages and the like. Further, the inventors have found that, when such concentrated milk and milk powder are used as raw materials for milk products and bread, not only the improvement of flavor but also the improvement of physico-chemical food properties such as fine texture and porosity can be exerted.

The invention relates to the following (1) to (7).

(1) A process for producing concentrated milk or milk powder comprising the steps of:

removing ions from and reducing the dissolved oxygen concentration in milk to 8 ppm or less either concurrently or in either order, the dissolved oxygen concentration being reduced by putting the milk into contact with inactive gas or by leaving the milk to stand alone under reduced pressure, and

heat sterilising the resultant milk.

(2) The process of producing concentrated milk or milk powder according to (1), wherein the ions are chloride ions and/or monovalent cations.

(3) The process of producing concentrated milk or milk powder according to (2), wherein the chloride ions are removed at a removal ratio of 10 to 70%.

(4) The process of producing concentrated milk or milk powder according to (2) or (3), wherein the monovalent cations are removed at a removal ratio of 10 to 35%.

(5) Concentrated milk or milk powder with good flavor, which is obtainable by the process according to any one of (1) to (4).

(7) Concentrated milk or milk powder with excellent properties as a raw food material, which is obtainable by the process according to any one of (1) to (4)

In Comparison with usual milk powder and concentrated milk, the concentrated milk and the milk powder as obtained in accordance with the invention have good flavor, and when they are used as materials for beverages and the like, they give a good taste, freshness, highly smooth touch, and good aftertaste essential to fresh milk. In addition, when the concentrated milk and the milk powder as obtained in accordance with the invention are used as raw materials for milk products and bread, it is possible to improve the flavor and food physico-chemical properties such as texture and porosity.

Brief Description of the Drawings

Fig. 1 shows organoleptic assessment scores of reconstituted defatted milk prepared from concentrated milk.

Fig. 2 shows organoleptic assessment scores of reconstituted defatted milk prepared from milk powder.

Fig. 3 shows results of the colorimetric assay (432 nm) of the -SH group content in milk powder.

Fig. 4 shows results of the hexanal assay of milk powder.

Fig. 5 shows the results of the assay of the sulfides content in milk powder.

Best Mode for Carrying out the Invention

The invention is now described in detail hereinbelow.

The invention relates to a process of producing concentrated milk and milk powder, including a combination of removing ions from milk and reducing the dissolved oxygen concentration in milk, followed by conducting heat sterilization; as well as concentrated milk and milk powder having good flavor which is never found in conventional concentrated milk and milk powder and exerting an effect of improved physico-chemical properties as raw food materials, according to the process.

Any milk may be used in accordance with the invention, with no specific limitation, so long as the milk is mamnalian milk. Although the types thereof are not limited to the followings, they include cow milk, goat milk, sheep milk, water buffalo milk, swine milk and human milk. Among them, cow milk from Holstein species and Jersey species is preferably used owing to the ready availability and the cost.

In accordance with the invention, these types of fresh milk can be used as they are. Additionally, defatted milk and partially defatted milk prepared by removing milk fat from the above types of fresh milk may also be used. In accordance with the invention, ions are removed from such milk. Examples of ions to be removed include chloride ions and/or monovalent cations. Herein, the monovalent cation means sodium ion, potassium ion and the like. For removing chloride ions, for example, anion exchange process can be used. Additionally, processes such as electrodialysis process and membrane filtration process may also be used. Further, cation exchange process can be used for removing cations. A combination of these processes may also be carried out for appropriately removing the ions.

When NF membrane is used, for example, not only chlorides but also monovalent cations are removed. When membranes except NF membrane, for example, UF membrane are used, ingredients such as lactose are removed in addition to chloride ions and cations. In accordance with the invention, chloride ions may satisfactorily be removed, by concentrating raw material milk as they are through membranes. Chloride ions are removed at 10% to 70%, preferably at 35% to 70%, more preferably 45% to 70% of the chloride ions exiting before removal. Additionally, monovalent cations are removed at 10% to 35%, preferably at 15% to 30%, more preferably 20% to 30 % of the monovalent cations exiting before removal.

Herein, the term "removal ratio" of ions in accordance with the invention means the ratio of the decrease in comparison with the case without removal of ions, and is represented by the following expression.

$$\text{(Removal ratio (\%))} = [\{\text{(ion amount in a case without ion removal)} - \text{(ion amount after ion removal)}\} / \text{(ion amount in a case without ion removal)}] \times 100$$

Namely, in accordance with the invention, the removal ratio of chloride ions is from 10% to 70%, preferably from 35% to 70%, more preferably from 45% to 70%. Further, the removal ratio of monovalent cations is from 10% to 35%, preferably from 15% to 30%, morse preferably from 20% to 30%.

Milk after ion removal is then put into contact with inactive gas or is left to stand alone under reduced pressure, so that the dissolved oxygen concentration in the milk is reduced. The treatment for reducing the dissolved oxygen concentration may be carried out, concurrently with the treatment for ion removal, or before the treatment for ion removal so long as the dissolved oxygen concentration is kept low, or an appropriate combination of the treatment for reducing dissolved oxygen concentration before, during and after the treatment for ion removal may satisfactorily be done. The dissolved oxygen concentration in milk is 8 ppm or less, preferably 5 ppm or less, more preferably 2 ppm or less.

Milk after the ion removal and the reduction of the dissolved oxygen concentration is then subjected to a heat sterilization treatment, for the purpose of killing bacteria and inactivating enzymes such as protease. As the conditions for the sterilization treatment, for example, high-temperature short-time sterilization (HTST sterilization) at 80°C for 20 seconds and ultra high-temperature sterilization (UHT sterilization) at 105°C to 125°C for 2 to 15 seconds may appropriately be selected. Milk after the ion removal and the reduction of the dissolve oxygen never generates any aggregation or precipitation of milk protein during the sterilization under heating. The milk has rather better thermal resistance.

By concentrating the milk sterilized under heating, concentrated milk can be obtained. For concentrating the milk sterilized under heating, concentration techniques for general use may be used. For example, by the concentration under reduced pressure with evaporators, concentrated milk having a solid content of 20 to 50% can be prepared.

For example, when the chloride ion content in the concentrated milk (at a solid content of about 35%) with no milk fat removal as obtained in such manner is 127 mg% (w/w), it is shown that about 50% of chloride ions are removed. When the sum of sodium ions and potassium ions is 500 mg% (w/w) in case of defatted concentrated milk (at a solid content of about 35%), about 25% of monovalent cations are removed.

Milk powder is obtainable by drying concentrated milk. As a drying process, general drying techniques with freeze-drying machines, drum dryer, and spray-dryer may satisfactorily be used. Using a spray-dryer, for example, concentrated milk is sprayed in heated air at 130 to 200°C to evaporate approximately the whole water, to obtain milk powder.

For example, when the chloride ion content in the defatted milk powder (at a solid content of about 96%) is 570 mg% (w/w), about 50% of chloride ions are removed. When the sum of sodium ions and potassium ions is 1400 mg% (w/w) therein, about 25% of monovalent cations are removed.

By reconstituting such concentrated milk and milk powder in water suitable for drinking, processed milk and milk drinks can be prepared. In this regard, coffee, fruit juice, flavor and the like may appropriately be mixed therein. Additionally, sterilization under heating may appropriately be done. Milk drinks obtained in such manner have excellent flavor which has never been obtained conventionally, together with highly exerted milk flavor.

By reconstituting the concentrated milk and the milk powder as obtained in such manner in other raw milk materials or in water suitable for drinking, milk products can be prepared. Additionally, raw food materials other than milk may be added. Yogurt obtained via fermentation by adding a commercially available starter such as lactic acid bacteria to the milk products thus prepared has not only good flavor but also physico-chemical properties such as fine texture, as never obtained conventionally.

The concentrated milk and the milk powder as obtained in such manner may also be used as raw materials for confectioneries and bread making, as alternatives of usual concentrated milk and milk powder. In the case of using in bread, bread with good flavor and with finely aligned porosity can be obtained, in comparison with conventional milk powders.

Examples

The invention is now described in the following Examples. However, the invention is not limited thereto.

Example 1

Two hundred and fifty kg of non-sterilized raw milk (at a milk fat content of 3.7% and a non-fat milk solid content of 8.6%) were subjected to a filtration treatment through an NF membrane (manufactured by Dow-Filmtech Corporation) at 10°C for ion removal. The solid content after the treatment with the NF membrane was 18%. After nitrogen gas was bubbled into 80 kg of the resulting membrane-treated milk, the resulting milk was left to stand alone in a tank for defoaming. The dissolved oxygen concentration was measured with a dissolved oxygen counter (DKK-TOA CORPORATION; Type DO-21P). The concentration was 1.5 ppm. Immediately, sterilization under heating at 100°C for 45 seconds was done with a UHT plate type experimental sterilizer (Iwai Kikai Kogyo Co., Ltd.; VHX-CR2-200). Subsequently, the milk was cooled to 5°C. Then, 70 kg of the resulting deionized, sterilized milk was concentrated under reduced pressure with an evaporator under reduced pressure, to recover 30 kg of concentrated milk at a solid content of 35%. Twenty-five kg of the concentrated milk was then spray-dried with a longitudinal dryer, to obtain about 9 kg of milk powder. As a comparison lot, the ion-removed milk of 80 kg from the non-sterilized raw milk was sterilized under heating at 100°C for 45 seconds with a UHT plate type experimental sterilizer and then cooled to 5°C. Then, 70 kg of the deionized, sterilized milk was concentrated under reduced pressure to a solid content of 35% with an evaporator under reduced pressure, to recover 30 kg of the concentrated milk (comparison lot: concentrated milk). Twenty-five kg of the concentrated milk was then spray-dried, to obtain about 9 kg of milk, powder (comparison lot: milk powder). As a control, concentrated milk was prepared by sterilization and concentration without membrane treatment nor nitrogen gas treatment of the non-sterilized raw milk (control: concentrated milk), while milk powder was additionally prepared by further spray-drying the concentrated milk (control: milk powder).

Chlorine contents in such concentrated milk and milk powder were measured with a chloride counter. The results are shown'in Table 1. The ratio of the reduction of the ion concentration in comparison with the controls is expressed as removal ratio (%).

Table 1

| Chlorine ion concentrations in concentrated milk and milk powder | | | | | |
|---|---|---|---|---|---|
| | Control (mg%) | Comparison lot (mg%) | Invention (mg%) | (Control-Invention) (mg%) | Removal ratio |
| Concentrated milk | 262 | 130 | 127 | 135 | 51.5 |
| Milk powder | 852 | 405 | 410 | 442 | 51.9 |

As apparently shown in Table 1, the removal ratios of chlorine ions in the concentrated milk and the milk powder as the inventive products were about 50% of the ratios in the controls.

Eighty g each of these concentrated milks of the control, the comparison lot, and the invention was mixed with 320 g of fresh cream (fat: 47%), to which granulated sugar of 32 g was added for thorough mixing in an ice bath, until the product temperature reached 5°C. Just then, the mixture was whipped with an electric hand mixer. The resulting whipped cream types were presented to a panel of 10 experts, for a comparative test between the inventive product and the control products. The results are shown in Table 2.

Table 2

| Flavor assessment of whipped cream using concentrated milk | | |
|---|---|---|
| | Number of people who think product using the control has stronger/better flavor | Number of people who think product using the inventive product has stronger/better flavor |
| Fresh milk flavor | 0 | 10 |
| General flavor assessment | 1 | 9 |

As apparently shown in Table 2, the inventive product has stronger fresh milk aroma and greater flavor, compared with the control.

In the same manner, whipped cream types individually using the concentrated milk in the comparison lot and the concentrated milk of the invention were prepared and compared to each other by a panel of 10 experts. The results are shown in Table 3.

Table 3

| Flavor assessment of whipped cream using concentrated milk | | |
|---|---|---|
| | Number of people who think product using the comparison lot has stronger/better flavor | Number of people who think product using the inventive product has stronger/better flavor |
| Fresh milk flavor | 1 | 9 |
| General flavor assessment | 2 | 8 |

As apparently shown in Table 3, the inventive product has stronger fresh milk aroma and greater flavor, compared with the comparison lot (Table 3).

Example 2

Raw milk was passed through a continuous centrifuge separator, for removing the fat layer, to obtain 400 kg of defatted milk (a milk fat content of 0.1% and a non-fat milk solid content of 8.9%). After sterilization under heating at 125°c for 15 seconds was done with a small type plate experimental sterilizer for both UHT/HTST (a flow of 150 L/hr; manufactured by Iwai Machine Co., Ltd.), the resulting milk was cooled to 5°C. The resulting non-fat milk was of 380 kg. Three hundred and fifty kg of the sterilized non-fat milk was separated, for concentration under reduced pressure with an evaporator under reduced pressure, until the concentration of solid contents reached 35%. The amount of water evaporated was 263 kg, to finally obtain 87 kg of defatted concentrated milk (control: defatted concentrated milk). Then, 80 kg of the defatted concentrated milk was separated and spray-dried, to obtain 25 kg of defatted milk powder (control: defatted milk powder) .

Ions were removed from 400 kg of non-sterilized non-fat milk through an NF membrane (manufactured by Dow-Filmtech Corporation) at 10°C, to obtain processed milk at a solid content of 18%. After sterilization of the processed milk under heating at 125°C for 15 seconds was done with a small type plate experimental sterilizer for both UHT/HTST (a flow of 150 L/hr; manufactured by Iwai Machine Co., Ltd.), the resulting milk was cooled to 5°C. The 170 kg of resulting sterilized membrane-treated milk was concentrated under reduced pressure with an evaporator under reduced pressure, until the solid content reached 35%. The amount of water evaporated was 83 kg, to finally obtain 87 kg of membrane-treated concentrated milk (Comparative Example A). Then, 80 kg of the membrane-treated concentrated milk was separated and spray-dried, to obtain 25 kg of milk powder (Comparative Example a).

Four hundred kg of non-sterilized non-fat milk was subjected to ion removal through an NF membrane (manufactured by Dow-Filmtech Corporation) at 10°C, to obtain processed milk at a solid content of 18%. As an inactive gas, nitrogen gas was sealed into the membrane-treated milk, until the dissolved oxygen concentration measured with a dissolved oxygen counter (DKK-TQA CORPORATION; Type DO-21P) reached 2 ppm; immediately thereafter, sterilization under heating at 125°C for 15 seconds was done with a small type plate experimental sterilizer for both UHT/HTST (a flow of 150 L/hr; manufactured by Iwai Machine Co., Ltd.); and subsequently, the resulting milk was cooled to 5°C. The 170 kg of resulting membrane-treated milk after the oxygen reduction treatment and sterilization was concentrated under reduced pressure with a vacuum evaporator, until the solid content reached 35%. The amount of water evaporated was 83 kg, to finally obtain 87 kg of membrane-treated concentrated milk (Invention B) . Then, 8.0 kg of the membrane-treated concentrated milk was separated and spray-dried, to obtain 25 kg of milk powder (Invention b).

Four hundred kg of non-sterilized non-fat milk was placed in a sealed tank, where nitrogen gas as an inactive gas was sealed to a dissolved oxygen concentration of 2 ppm. After defoaming was certified, ions were removed from 400 kg of non-sterilized non-fat milk through an NF membrane (manufactured by Dow-Filmtech Corporation) at 10°C, to obtain processed milk at a solid content of 18%. After sterilization under heating at 125°C for 15 seconds was done with a small type plate experimental sterilizer for both UHT/HTST (a flow of 150 L/hr; manufactured by Iwai Machine Co., Ltd.), the resulting milk was cooled to 5°C. The 170 kg of resulting membrane-treated milk after the oxygen reduction treatment and sterilization was concentrated under reduced pressure with a vacuum evaporator, until the solid content reached 35%. The amount of water evaporated was 83 kg, to finally obtain 87 kg of membrane-treated concentrated milk (Invention C). Then, 80 kg of the membrane-treated concentrated milk was separated and spray-dried, to obtain 25 kg of milk powder (Invention c).

Table 4 shows the compositions of the components and the ion removal ratios in the defatted concentrated milk (control), and Comparative Example A through Invention C.

Table 4

| Components of compositions and ion removal ratios of defatted concentrated milk | | | | |
|---|---|---|---|---|
| Compositions of components | Defatted concentrated milk Control | Comparative Example A | Invention B | Invention C |
| Total solid content (%) | 35.0 | 35.0 | 35.0 | 35.0 |
| Milk fat (%) | 0.2 | 0.2 | 0.2 | 0.2 |
| Non-fat milk solid content (%) | 34.8 | 34.8 | 34.8 | 34.8 |
| Protein (%) | 13.3 | 13.0 | 13.0 | 13.0 |
| Nitrogen in non-amino form (%) | 0.1 | 0.1 | 0.1 | 0.1 |
| Carbohydrates (%) | 18.6 | 19.3 | 19.3 | 19.3 |
| Ashes (%) | 2.9 | 2.5 | 2.5 | 2.5 |
| Sodium (mg %) | 154 | 112 | 113 | 113 |
| Potassium (mg %) | 540 | 406 | 397 | 395 |
| Calcium (mg %) | 485 | 485 | 481 | 480 |
| Magnesium (mg %) | 47 | 46 | 46 | 45 |
| Phosphorus (mg %) | 373 | 378 | 373 | 374 |
| Chloride (mg %) | 409 | 192 | 208 | 200 |
| Removal ratio | | | | |
| Chloride (%) | 0 | 53 | 49 | 51 |
| Sodium (%) | 0 | 27 | 27 | 27 |
| Potassium (%) | 0 | 25 | 26 | 27 |

As apparently shown in Table 4, no reduction of protein, carbohydrates and divalent minerals such as calcium and magnesium as nutrients expected toward milk was observed in Comparative Example A to Invention C treated with the NF membrane, in comparison with the control defatted concentrated milk without any NF membrane treatment. Meanwhile, about 50% of chloride was removed. Additionally, sodium and potassium as monovalent cations were removed by about 25%.

Table 5 shows the compositions of the components and the ion removal ratios in the defatted milk powder (control) and Comparative Example a to Invention c.

Table 5

| Components of compositions and ion removal ratios of defatted milk powder | | | | |
|---|---|---|---|---|
| Compositions of components | Defatted milk powder Control | Comparative Example a | Invention b | Invention c |
| Total solid content (%) | 95.4 | 96.1 | 96.1 | 95.6 |
| Milk fat (%) | 0.6 | 0.5 | 0.5 | 0.5 |
| Non-fat milk solid content (%) | 94.9 | 95.6 | 95.6 | 96.1 |
| Protein (%) | 36.2 | 35.6 | 35.8 | 35.7 |
| Nitrogen in non-amino form (%) | 0.3 | 0.2 | 0.2 | 0.2 |
| Carbohydrates (%) | 50.6 | 53.0 | 52.9 | 52.9 |
| Ashes (%) | 7.8 | 6.8 | 6.8 | 6.8 |
| Sodium (mg %) | 419 | 308 | 310 | 311 |
| Potassium (mg %) | 1471 | 1114 | 1090 | 1085 |

(continued)

| Components of compositions and ion removal ratios of defatted milk powder | | | | |
|---|---|---|---|---|
| Compositions of components | Defatted milk powder Control | Comparative Example a | Invention b | Invention c |
| Calcium (mg %) | 1321 | 1331 | 1322 | 1320 |
| Magnesium (mg %) | 129 | 127 | 125 | 124 |
| Phosphorus (mg %) | 1018 | 1037 | 1025 | 1028 |
| chloride (mg %) | 1116 | 526 | 570 | 548 |
| Removal ratio | | | | |
| chloride (%) | 0 | 53 | 49 | 51 |
| Sodium (%) | 0 | 26 | 26 | 26 |
| Potassium (%) | 0 | 24 | 26 | 26 |

As apparently shown in Table 5, no reduction of protein, carbohydrates and divalent minerals such as calcium and magnesium as nutrients expected toward milk was observed in Comparative Example a to Invention c, in comparison with the control defatted milk powder. Meanwhile, 49% to 53% of chloride was removed. Additionally, sodium and potassium as monovalent cations were removed by 26% and 24 to 26%, respectively.

Example 3

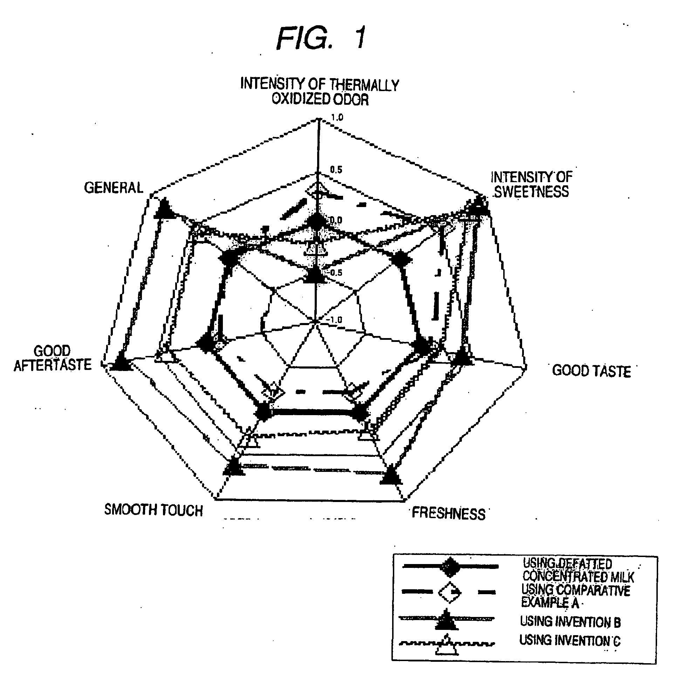

The defatted concentrated milk (control) and Comparative Example A to Invention C as prepared in Example 2 were diluted individually with distilled water, to adjust the non-fat milk solid contents therein to 8.8%. After sterilization under heating at 95°C for 15 seconds was done with a small type plate experimental sterilizer for both UHT/HTST (a flow of 150 L/hr; manufactured by Iwai Machine Co., Ltd.), the resulting milk types were cooled to 5°C. So as to assess the flavor and characteristic features of these reconstituted defatted milk samples, an organoleptic assessment was done. The organoleptic assessment was done by a panel of 10 experts having been trained to discriminate five types of taste (sweetness, sourness, salty taste, bitterness, umami) according to the two-point comparative method. The results are shown in Fig.1.

As apparently shown in the results in Fig.1, the product using Comparative Example A, to which only ion removal was conducted had larger scores in terms of thermally oxidized odor and sweetness in comparison with the control, while almost no differences were observed in other characteristic organoleptic items. Scores of general taste were at the same level. The product using Invention B, which was subjected to ion removal, subsequent reduction of the dissolved oxygen concentration to 2 ppm and sterilization under heating had a smaller score in terms of thermally oxidized odor and larger scores of characteristic organoleptic items including the good taste, freshness, smooth touch and good aftertaste essential to fresh milk, leading to higher assessment of general taste, in comparison with the control and the product using Comparative Example A. The product using Invention C, which was subjected to the reduction of the dissolved oxygen concentration to 2 ppm before ion removal, subsequent ion removal and sterilization had a smaller score of thermally oxidized odor and larger scores of characteristic organoleptic items including the good taste, freshness, smooth touch and good aftertaste essential to fresh milk, leading to higher assessment of general taste, in comparison with the control and the product using Comparative Example A

Example 4

So as to verify the influence of the dissolved oxygen concentration on flavor, non-sterilized non-fat milk was subjected to ion removal through an NF membrane according to the preparation method in Example 2. Via nitrogen sealing, continuously, the membrane-treated milk was adjusted to a dissolved oxygen concentration of 12 ppm

(no nitrogen sealing), 8 ppm, 5 ppm or 2 ppm, for individual sterilization treatment and subsequent concentration under reduced pressure, to obtain defatted concentrated milk (control) and Inventions D through F.

The individual defatted concentrated milk types were diluted to a non-fat milk solid content of 8.8% with distilled water, for sterilization under heating at 95°C for 15 seconds with a small type plate experimental sterilizer, which were then cooled to 5°C to obtain four samples of reconstituted defatted milk types. So as to assess the flavor and characteristic features of these samples, an organoleptic assessment was done. The organoleptic assessment was carried out by a panel of 5 experts according to the score method. The results are shown in Table 6.

Table 6

| Organoleptic assessment scores of defatted milk prepared by reconstituting defatted concentrated milk | | | | |
|---|---|---|---|---|
| | Control | Invention (using D) | Invention (using E) | Invention (using F) |
| Dissolved oxygen concentration (ppm) | 11.5 | 7.5 | 4.8 | 1.9 |
| Thermally oxidized odor | 3.8 | 2.6 | 1.8 | 1.2 |
| Good aftertaste | 1.4 | 2.4 | 3.8 | 4.6 |
| Scores<br>5: very strong<br>4: strong<br>3: more or less strong<br>2: slightly felt<br>1: absolutely never felt | | | | |

As apparently shown in Table 6, the score of the thermally oxidized odor of the samples was decreased as the dissolved oxygen concentration was reduced, so that the aftertaste score became higher, indicating the improvement of the flavor. The effect of improving flavor was also observed in the low-mineral defatted concentrated milk at a dissolved oxygen concentration of 8 ppm. At 5 ppm, almost no thermally oxidized flavor was felt, so that good aftertaste was improved at a clearly appreciable level. At 2 ppm, absolutely no generation of thermally oxidized odor was felt, while the aftertaste was exceedingly great.

Example 5

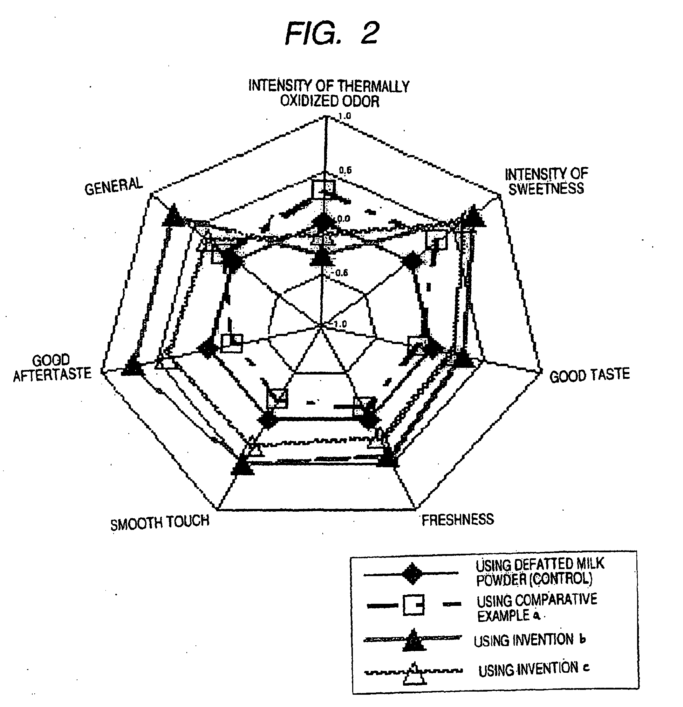

So as to assess the flavor and characteristic features of the defatted milk powder (control) and Comparative Example a to Invention c as prepared in Example 2, the individual defatted milk powder types were diluted with distilled water to adjust the non-fat milk solid content to 8.8%, for sterilization under heating at 95°C for 15 seconds with a small type plate experimental sterilizer, which were then cooled to 5°C. So as to assess the flavor and characteristic features of these reconstituted defatted milk samples, an organoleptic assessment was done. The organoleptic assessment was carried out by a panel of 10 experts according to the two-point comparison method. The results are shown in Fig. 2.

As apparently shown in Fig.2, a sample prepared by using the defatted milk powder of Comparative Example a obtained by sterilization, concentration and spray-drying without reduction of dissolved oxygen concentration after the deionization treatment had larger scores in terms of thermally oxidized odor and sweetness but did not differ in the scores of the other characteristic organoleptic items, in comparison with the sample prepared from the control defatted milk powder. No difference was observed in the score of general taste.

However, a sample prepared from the Inventive product b obtained by sterilization, concentration and spray-drying after the deionization treatment and the subsequent reduction of the dissolved oxygen concentration to 2 ppm had larger scores in terms of the good taste, freshness, smooth touch and good aftertaste essential to fresh milk, in comparison with the control and the sample of Comparative Example a. Meanwhile, the score of the thermally oxidized odor was smaller. Further, the score of general taste was higher.

A sample prepared from the Inventive product c obtained by sterilization, concentration and spray-drying after the deionization treatment and the subsequent reduction of the dissolved oxygen concentration to 2 ppm had larger scores in terms of the good taste, freshness, smooth touch and good aftertaste essential to fresh milk, in comparison with the control and the sample of Comparative Example a. Further, the score of general taste was higher.

Example 6

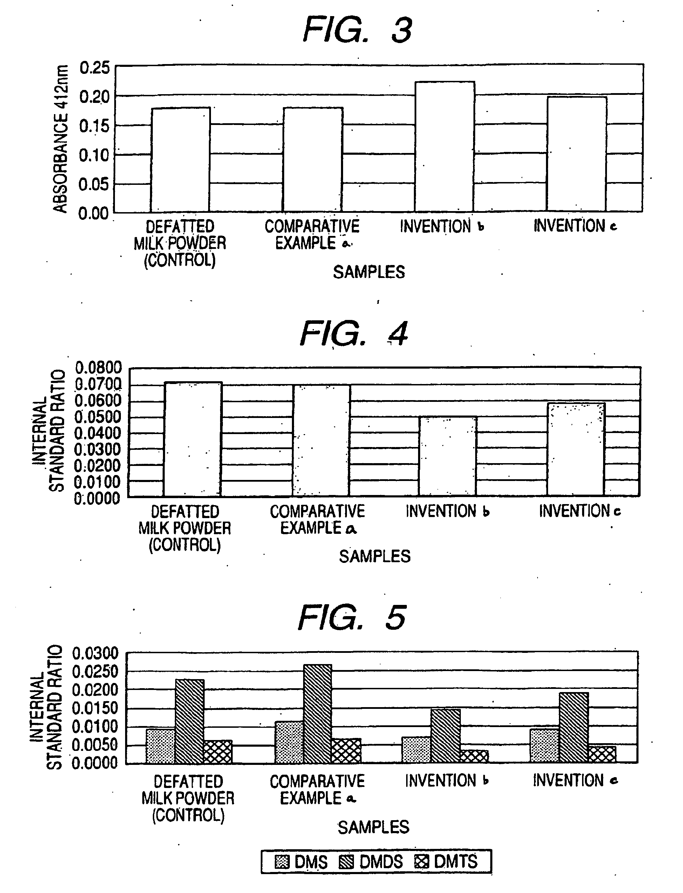

Concerning the defatted milk powder (control) and Comparative Example a to Invention c as prepared in Example 2, the content of the -SH group was assayed. After milk powder was dispersed and dissolved in distilled water, the content of the group -SH was assayed by colorimetric analysis according to the general method (J. Dai. Sci., 51, 2, p217-219 (1968)). The results are shown in Fig. 3.

Additionally, various sulfides such as hexanal and dimethyl sulfide (DMS), dimethyl disulfide (DMDS), dimethyl trisulfide (DMTS) were assayed by GC/MS (manufactured by Hitachi Co., Ltd.; HP 6890 SERIES PLUS/HP 5793 MSD) analysis according to the HS/TCT (HeadSpace/Thermal-desorption Cold Trap injection) method.

The contents of hexanal are shown in Fig.4.

The contents of sulfides are shown in Fig.5.

As apparently shown in Fig.3, almost no difference in the amount of unreactive -SH group in milk protein was observed between Comparative Example a obtained by sterilization, concentration under reduced pressure and subsequent spray-drying without reduction of the dissolved oxygen concentration after ion reduction and the control. It is suggested that the generation of lipid peroxide in radicals is not suppressed.

As apparently shown in Fig.4, no difference in the content of hexanal as one of final products of lipid peroxide in radicals was observed between them.

As apparently shown in Fig.5, sulfides as oxidation products of sulfur-containing amino acids in milk protein were generated at a larger amount than in the control.

Compared with the control, Invention b, obtained by sterilization, concentration under reduced pressure and subsequent spray-drying after the deionization treatment and the reduction of the dissolved oxygen concentration to 2 ppm, contains more residual -SH group (see Fig. 3), while the decrease of generated hexanal amount (see Fig.4), and the suppression of the oxidation of milk protein leading to a consequence of the decrease of generated sulfides (see Fig.5) were verified. The effect of the reduction of the dissolved oxygen concentration on the suppression of the generation of unsaturated fatty acid radical was also observed.

Compared with the control, Invention c, obtained by the ion removal treatment after reducing the dissolved oxygen concentration of non-sterilized defatted milk to 2 ppm, and the subsequent sterilization, concentration under reduced pressure and spray-drying, contains more residual - SH group (see Fig. 3), while the decrease of generated hexanal amount (see Fig.4), and the suppression of the oxidation of milk protein leading to a consequence of the decrease of generated sulfides (see Fig.5) were verified. The effect of the reduction of the dissolved oxygen concentration on the suppression of the radical preparation of unsaturated fatty acid was also observed.

These results precisely describe the results of organoleptic assessment in Example 4. The flavor of defatted milk powder adjusted to have a low ion level could be improved even after spray-drying, owing to the effect of reducing the dissolved oxygen concentration according to the invention, which was chemically and scientifically verified.

Example 7

Using the defatted milk powder (control), Comparative Example a and Inventive product b as prepared in Example 2, coffee milk drinks at recipe shown in Table 7 were prepared.

Table 7

| Recipe of coffee milk drinks | | | |
| --- | --- | --- | --- |
| Raw materials used (%) | Coffee milk drink (control) | Coffee milk drink (Comparative Example) | Coffee milk drink (Invention) |
| Fresh cream | 3.10 | 3.10 | 3.10 |
| Defatted milk powder control) | 3.30 | - | - |
| Defatted milk powder (Comparative Example a) | - | 3.30 | - |
| Defatted milk powder (Invention b) | - | - | 3.30 |
| Sugar | 5.70 | 5.70 | 5.70 |
| Roasted coffee bean extract solution | 25.00 | 25.00 | 25.00 |
| Emulsifier sugar ester | 0.05 | 0.05 | 0.05 |
| pH adjuster sodium hydrogen carbonate | 0.08 | 0.08 | 0.08 |
| Ion exchange water | 62.77 | 62.77 | 62.77 |
| Total | 100.00 | 100.00 | 100.00 |

Roasted coffee bean extract solution: 100 g of medium-roasted ground bean was extracted in 1000 g of ion exchange water at 95°C, followed by filtration through flannel.

After the raw materials were mixed together and dissolved, the resulting mixture was emulsified under pressure at 25 MPa using a homogenizer, was filled in a 190-ml steal can and fastened by winding. Subsequently, the can was thermally treated at 121°C for 15 minutes with a retort type sterilizer, and was immediately cooled to 25°C, to obtain a coffee milk drink.

So as to assess flavor and characteristic properties, samples 3 days after the production were subjected to an organoleptic assessment. The organoleptic assessment was carried out by a panel of 5 experts by the score method. The results are shown in Table 8.

Table 8

| Organoleptic assessment of coffee milk drinks | | | |
|---|---|---|---|
| Organoleptic properties | Control | Comparative Example | Example |
| Thermally oxidized odor | 4.6 | 4.4 | 1.6 |
| Coffee flavor | 2.0 | 2.4 | 4.6 |
| Milk flavor | 2.2 | 3.2 | 4.6 |
| Good aftertaste | 1.6 | 2.4 | 4.8 |

As apparently shown in Table 8, a coffee milk drink using Comparative Example a, obtained by ion removal treatment alone without reduction of dissolved oxygen concentration had a larger score in terms of thermally oxidized odor, as the coffee milk drink using the defatted milk powder (control), but smaller scores in terms of good aftertaste and coffee flavor. The coffee milk drink using the inventive product b had less thermally oxidized odor in comparison with the other coffee milk drinks, so that the coffee milk drink had not only refreshing aftertaste and strong milk flavor but also great coffee flavor. The coffee milk drink-realized flavor with the generation of fewer off-flavor, as never attained conventionally.

Example 8

Using the defatted milk powder (control), Comparative Example a and Inventive product b as prepared in Example 2, fermented milk types at recipe shown in Table 9 were prepared.

Table 9

| Recipe of fermented milk types | | | |
|---|---|---|---|
| Raw materials used (%) | Fermented milk (control) | Fermented milk (Comparative Example) | Fermented milk (Invention) |
| Fresh milk | 50.00 | 50.00 | 50.00 |
| Fresh cream | 10.00 | 10.00 | 10.00 |
| Defatted milk powder (control) | 10.00 | - | - |
| Defatted milk powder (Comparative Example a) | - | 10.00 | - |
| Defatted milk powder (Invention b) | - | - | 10.00 |
| Starter | 2.00 | 2.00 | 2.00 |
| Ion exchange water | 28.00 | 28.00 | 28.00 |
| Total | 100.00 | 100.00 | 100.00 |
| Fermentation time (minute) | 200 | 200 | 200 |
| Final pH | 4.8 | 4.8 | 4.8 |

The raw materials except the starter were blended together and dissolved together. The resulting mixtures were thermally sterilized under heating at 95°C for 15 seconds with a small type plate experimental sterilizer for both UHT/HTST, which were then cooled to 43°C as the temperature of the mixture products. Immediately, the lactic acid bacteria starter was inoculated at 2%. The resulting mixtures were filled in a 500-ml container made of polyethylene-lined paper, which was then sealed and placed in a thermostat chamber. The mixtures were left to stand still at 43°C for 200 minutes for fermentation. After termination of fermentation, the containers were immediately transferred to a refrigerator at 4°C for overnight refrigeration, to obtain fermented milk samples.

So as to assess flavor and characteristic features, these samples were subjected to an organoleptic assessment by the score method by a panel of 5 experts. The results are shown in Table 10.

Table 10

| Scores of fermented milk by organoleptic assessment and texture | | | |
|---|---|---|---|
| Organoleptic characteristics | Control | Comparative Example | Invention |
| Sourness | 3.0 | 2.4 | 2.4 |
| Sweetness | 1.4 | 2.4 | 3.0 |
| Enriched taste | 3.6 | 4.4 | 4.8 |
| Good taste | 3.2 | 3.8 | 4.6 |
| Good aftertaste | 2.0 | 1.8 | 4.8 |
| Texture | slightly coarse | slightly coarse | fine |

As apparently shown in Table 10, the fermented milk using the inventive product b, obtained by the reduction of the dissolved oxygen concentration to 2 ppm after the NF-membrane treatment, subsequent concentration under reduced pressure, and spray-drying had almost no change of the intensity of sourness in comparison with the fermented milk using defatted milk powder (control), but had stronger sweetness and enriched taste. The fermented milk had such organoleptic properties as good taste and good aftertaste clearly identifiable. Further, the fermented milk had a very fine texture. Thus, novel fermented milk never found conventionally could be obtained. The fermented milk using Comparative Example product a, obtained by a single treatment with NF membrane without reduction of the dissolved oxygen concentration could not get such prominent flavor and physico-chemical properties as those of the inventive product b.

Example 9

Using the defatted milk powder (control), Comparative Example a and Inventive product b as prepared in Example 2, loafs of bread at recipe shown in Table 11 were prepared.

Table 11

| Recipe of loafs of bread | | | |
|---|---|---|---|
| Raw materials used | Loaf of bread (control) | Loaf of bread (Comparative Example) | Loaf of bread (Invention) |
| Wheat flour | 100 | 100 | 100 |
| Defatted milk powder (control) | 3 | 3. | 3 |
| Yeast | 8 | 8 | 8 |
| Sugar | 2 | 2 | 2 |
| Salt | 8 | - | - |
| Defatted milk powder (comparative Example a) | - | 8 | - |
| Defatted milk powder (Invention b) | - | - | 8 |
| Whole egg | 10 | 10 | 10 |
| Fresh cream | 15 | 15 | 15 |
| Fate and oils | 12 | 12 | 12 |
| Water | 50 | 50 | 50 |
| Wheat flour was defined as 100 parts by weight. | | | |

All the raw materials except fats and oils among the dough blends were added and kneaded together with a mixer at a low speed for 2 minutes and then at a medium speed for 2 minutes, followed by addition of fats and oils, for kneading at a low speed for 4 minutes and at a medium speed for 9 minutes. The temperature after kneading was 27°C. From the resulting dough types, loafs of bread were obtained under preparation conditions shown in Table 12.

Table 12

| Preparation conditions for loafs of bread | |
|---|---|
| First fermentation | 60 minutes |
| Division | 420 g |
| Bench time | 25 minutes |
| Molding | Molding with molder |
| Second fermentation | 45 minutes (38°C, humidity of 85 %) |
| Baking | 25 minutes (upper flame at 200°C, lower flame at 200°C) |

So as to assess flavor and characteristic features, an organoleptic assessment was done about samples one day after the production date by a panel of 5 experts according to the score method. The results are shown in Table 13.

Table 13

| Organoleptic assessment of loafs of bread | | | |
|---|---|---|---|
| Organoleptic features | Control | Comparative Example | Invention |
| Fermentation aroma of bread | 1.8 | 2.2 | 4.4 |
| Good solubility in mouth | 2.8 | 2.6 | 4.6 |
| Moisture | 2.2 | 3.0 | 5.0 |
| General flavor | 2.0 | 3.2 | 4.6 |
| Scores<br>5: very good<br>4: good<br>3: more or less good<br>2: normal<br>1: poor | | | |

Additionally, the results of the analysis of the characteristic features of the loafs of bread are shown in Table 14.

Table 14

| Characteristic features of loafs of bread | | | |
|---|---|---|---|
| Physico-chemical properties | Control | Comparative Examples | Invention |
| Dough weight (g) | 420 | 419 | 416 |
| Final weight (g) | 364 | 368 | 370 |
| Reduction ratio due to baking (%) | 13.33 | 12.17 | 11.06 |
| Volume (ml) | 2071 | 1850 | 1930 |
| Specific volume (volume/weight) | 5.69 | 5.03 | 5.22 |
| Porosity | coarse | slightly coarse | uniform |

As apparently shown in the results in Table 13, the loaf of bread using the inventive product exerted an effect of prominent improvement of all the items including fermentation aroma of bread, good solubility in mouth, moisture and general flavor (taste), compared with the loafs of bread in the control example and the Comparative Example. As apparently shown in Table 14, additionally, the loaf of bread from the inventive product had uniform porosity and good physico-chemical properties, compared with the loafs of bread in the control example and the Comparative Example.

Example 10

Using the defatted milk powder (control), Comparative Example a and Invention b as prepared in Example 2, bread rolls at recipe shown in Table 15 were prepared.

Table 15

| Recipe of bread rolls | | | |
|---|---|---|---|
| Raw materials used | Bread roll (control) | Bread roll (Comparative Example) | Bread roll (Invention) |
| Wheat flour | 100 | 100 | 100 |
| Yeast | 3 | 3 | 3 |
| Sugar | 20 | 20 | 20 |
| Salt | 0.8 | 0.8 | 0.8 |
| Defatted milk powder (control) | 2 | - | - |
| Defatted milk powder (Comparative Example a) | - | 2 | - |
| Defatted milk powder (Invention b) | - | - | 2 |
| Whole egg | 9 | 9 | 9 |
| Fats and oils | 10 | 10 | 10 |
| Yeast food | 0.05 | 0.05 | 0.05 |
| Water | 52 | 52 | 52 |
| Wheat flour was defined as 100 parts by weight. | | | |

All the raw materials except fats and oils were kneaded together with a mixer at a low speed for 3 minutes and then at a medium speed for 2 minutes, followed by addition of fats and oils, for kneading at a low speed for 1 minute and at a medium speed for 6 minutes. The temperature after kneading was 27°C. From the resulting dough types, bread rolls were obtained under preparation conditions shown in Table 16.

Table 16

| Preparation conditions for bread rolls | |
|---|---|
| First fermentation | 120 minutes |
| Division | 110 g |
| Bench time | 20 minutes |
| Molding | Roll type |
| Second fermentation | 45 minutes (38°C, humidity of 85 %) |
| Baking | 11 minutes (upper flame at 200°C, lower flame at 180°C) |

So as to assess flavor and characteristic features, an organoleptic assessment was done about samples one day after the production date by a panel of 5 experts according to the score method. The results are shown in Table 17.

Table 17

| Organoleptic assessment of bread rolls | | | |
|---|---|---|---|
| Organoleptic features | Control | Comparative Example | Invention |
| Fermentation aroma of bread | 2.2 | 2.8 | 4.0 |
| Good solubility in mouth | 3.8 | 4.0 | 4.8 |
| Moisture | 2.0 | 3.0 | 5.0 |
| General flavor | 2.2 | 3.8 | 4.6 |
| Scores<br>5: very good<br>4: good<br>3: more or less good<br>2: normal<br>1: poor | | | |

Additionally, the analysis of the samples was carried out simultaneously. The results are shown in Table 18.

Table 18

| Characteristic features of bread rolls | | | |
|---|---|---|---|
| Physico-chemical properties | Control | Comparative Example | Invention |
| Dough weight (g) | 111.5 | 110 | 110 |
| Final weight (g) | 92.1 | 92.4 | 92.5 |
| Reduction ratio due to baking (%) | 17.4 | 16 | 15.9 |
| Volume (ml) | 650 | 550 | 550 |
| Specific volume (volume/weiqht) | 7.06 | 5.95 | 5.95 |
| Porosity | coarse | coarse | uniform |

As apparently shown in Table 17, the bread roll of the inventive product exerted an effect of the improvement of items of fermentation aroma of bread, good solubility in mouth, wet touch and general flavor (taste), compared with the bread rolls in the control and the Comparative Example. As apparently shown in Table 18, additionally, the bread roll of the inventive product had uniform porosity and was greater than those in the control and the Comparative Example.

Industrial Applicability

In accordance with the invention, concentrated milk and milk powder with the good taste, freshness, smooth touch and good aftertaste essential to fresh milk as maintained and improved therein can be provided, by the combination of the ion removal from milk and the reduction of the dissolved oxygen concentration in milk, followed by sterilization under heating.

**Claims**

1. A process for producing concentrated milk or milk powder comprising the steps of:

    removing ions from and reducing the dissolved oxygen concentration in milk to 8 ppm or less either concurrently or in either order, the dissolved oxygen concentration being reduced by putting the milk into contact with inactive gas or by leaving the milk to stand alone under reduced pressure, and
    heat sterilising the resultant milk.

2. A process according to Claim 1, wherein the ions are chloride ions and/or monovalent cations.

3. A process according to Claim 2, wherein the chloride ions are removed at a removal ratio of 10 to 70%.

4. A process according to Claim 2 or Claim 3, wherein the monovalent cations are removed at a removal ratio of 10 to 35%.

5. Concentrated milk or milk powder obtainable by the process as defined in any preceding claim.

6. Use of concentrated milk or milk powder obtainable by the process as defined in any of Claims 1 to 4 as a raw food material.

**Patentansprüche**

1. Verfahren zur Herstellung von konzentrierter Milch oder Milchpulver, umfassend die Schritte:

   das Entfernen von Ionen aus und das Verringern der Konzentration von gelöstem Sauerstoff in Milch auf 8 ppm oder weniger, entweder gleichzeitig oder in beliebiger Reihenfolge, wobei die Konzentration von gelöstem Sauerstoff verringert wird, indem die Milch in Kontakt mit einem inaktiven Gas gebracht oder die Milch für sich allein unter verringertem Druck gelassen wird,
   und das Wärmebehandeln der resultierenden Milch.

2. Verfahren gemäß Anspruch 1, bei dem die Ionen Chloridionen und/oder einwertige Kationen sind.

3. Verfahren nach Anspruch 2, bei dem die Chloridionen in einem Entfernungsanteil von 10 bis 70% entfernt werden.

4. Verfahren nach Anspruch 2 oder 3, bei dem die einwertigen Kationen in einem Entfernungsanteil von 10 bis 35% entfernt werden.

5. Konzentrierte Milch oder Milchpulver, erhältlich durch das in einem der vorangehenden Ansprüche definierte Verfahren.

6. Verwendung von konzentrierter Milch oder Milchpulver, erhältlich durch das in einem der Ansprüche 1 bis 4 definierte Verfahren, als Lebensmittelausgangsstoff.

**Revendications**

1. Procédé de production de lait concentré ou de poudre de lait comprenant les étapes :

   d'élimination d'ions et de réduction de la concentration en oxygène dissous dans du lait à 8 ppm ou inférieur soit concurremment, soit dans un ordre quelconque, la concentration en oxygène dissous étant réduite en mettant le lait en contact avec un gaz inactif ou en laissant le lait reposer seul sous pression réduite et
   de traitement thermique du lait résultant.

2. Procédé selon la revendication 1, dans lequel les ions sont des ions chlorure et/ou des cations monovalents.

3. Procédé selon la revendication 2, dans lequel les ions chlorure sont éliminés à un taux d'élimination de 10 à 70 %.

4. Procédé selon la revendication 2 ou la revendication 3, dans lequel les cations monovalents sont éliminés à un taux d'élimination de 10 à 35%.

5. Lait concentré ou poudre de lait pouvant être obtenu par le procédé selon l'une quelconque des revendications précédentes.

6. Utilisation de lait concentré ou de poudre de lait pouvant être obtenu par le procédé selon l'une quelconque des revendications 1 à 4 comme matière première alimentaire.

FIG. 1

# FIG. 2

## FIG. 3

## FIG. 4

## FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003047401 A
- JP 8266221 A
- JP 2004187539 A

**Non-patent literature cited in the description**

- Nyugyo eno Nariorokagijyutsu eno Ouyo (Application of nanofiltration technology to milk industry). **HITOSHI KUME.** New Membrane . Technology Symposium '95. Japan Membrane Academic Association, 14 March 1995
- *J. Dai. Sci.,* 1968, vol. 51 (2), 217-219